# EUROPÄISCHE PATENTSCHRIFT

(11) **EP 0 542 122 B1**
(45) Veröffentlichungstag und Bekanntmachung des Hinweises auf die Patenterteilung: **28.06.1995**
(21) Anmeldenummer: 92118918.9
(22) Anmeldetag: 05.11.1992
(51) Int. Cl.: C02F 1/42, B01J 47/02, C02F 9/00, B01J 47/00

(54) **Haushaltswasserfilter**
Domestic water filter
Filtre domestique d'eau

(43) Veröffentlichungstag der Anmeldung: 19.05.1993
(73) Patentinhaber: LEIFHEIT Aktiengesellschaft, D-56377 Nassau (DE)
(72) Erfinder: Schülein, Rolf Günter, W-5409 Singhofen (DE)

(56) Entgegenhaltungen:
- DE-A- 2 010 755
- DE-A- 3 535 679
- DE-U- 8 518 951
- DE-U- 8 713 769
- US-A- 4 578 187

## Beschreibung

Die Erfindung bezieht sich auf einen Haushaltswasserfilter gemäß dem Oberbegriff des Anspruchs 1.

Derartige Haushaltswasserfilter sind durch die EP-A-02 35 315, die DE-A-29 19 901 sowie durch die EP-A-04 98 913 bekannt. Dabei wird jeweils eine Filterpatrone verwendet, die mit einer Füllung aus einem lonentauschergranulat mit gesilberter Aktivkohle versehen ist. Die Standzeit der Filterpatrone ist einmal von der Wirksamkeit der verwendeten Füllung und insbesondere von der Füllmenge abhängig. Andererseits ist die Filterpatrone durch die vorhandenen Haushaltswasserfilter nicht beliebig zu vergrößern, um nicht die in den Haushalten vorhandenen Geräte unbrauchbar zu machen.

Aufgabe der Erfindung ist es, eine Filterpatrone des aufgezeigten Types zu schaffen, deren Filterkapazität, Zuverlässigkeit und Wirksamkeit gegenüber den aufgezeigten Filterpatronen verbessert wird und die universell bei verschiedenen Geräten eingesetzt werden kann.

Diese Aufgabe wird mit den kennzeichnenden Merkmalen des Anspruchs 1 gelöst. Üblicherweise wurden die Filterpatronen nicht bis an den oberen Rand gefüllt, so daß ein Quellraum blieb. Durch die Ausbildung der ringförmigen Kammern im Kopfteil der Filterpatrone wird die Möglichkeit geschaffen, auch Filterpatronen ohne ausgeprägten Einlaufdom bis zum Rand zu füllen. Die Filterpatrone wird dadurch in ihren Schlüsselmaßen nicht verändert. Die zusätzliche Anordnung der Verzögerungsplatte mit einer weiteren ringförmigen Kammer als Quellraum ermöglicht ein gleichmäßiges Quellmaß über das gesamte Füllvolumen, wodurch eine besonders gleichmäßige Benetzung des gesamten Granulats beim Wasserdurchlauf erreicht wird.

Vorteilhafte Ausgestaltungen der Erfindung sind in den Unteransprüchen aufgeführt. Die Entlüftungsöffnungen in den Kammern verbessern weiter den Wirkungsgrad und sichern einen störungsfreien Betrieb. Die Griffmulden dienen sowohl der sicheren Auflage der Verzögerungsplatte; sie dienen auch der einfachen Einsetzung der Filterpatrone in das Gerät.

Zwei Ausführungsbeispiele der Erfindung werden im folgenden anhand der Zeichnungen näher erläutert.

Es zeigen:

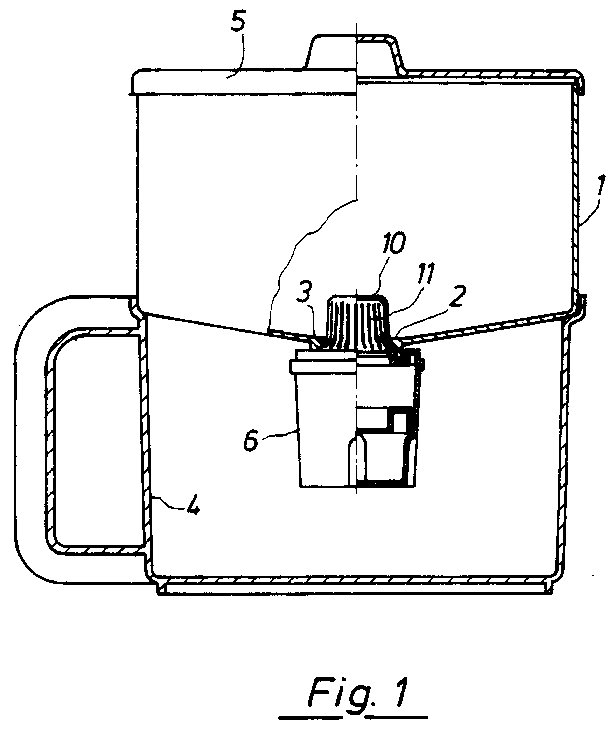

- Figur 1: eine Gesamtansicht eines Haushaltswasserfilters, teilweise im Schnitt, mit einer Aufnahme mit Gewinde zum Einschrauben der Filterpatrone,
- Figur 2: eine Alternativlösung mit einer Aufnahme zum Einstecken der Filterpatrone,

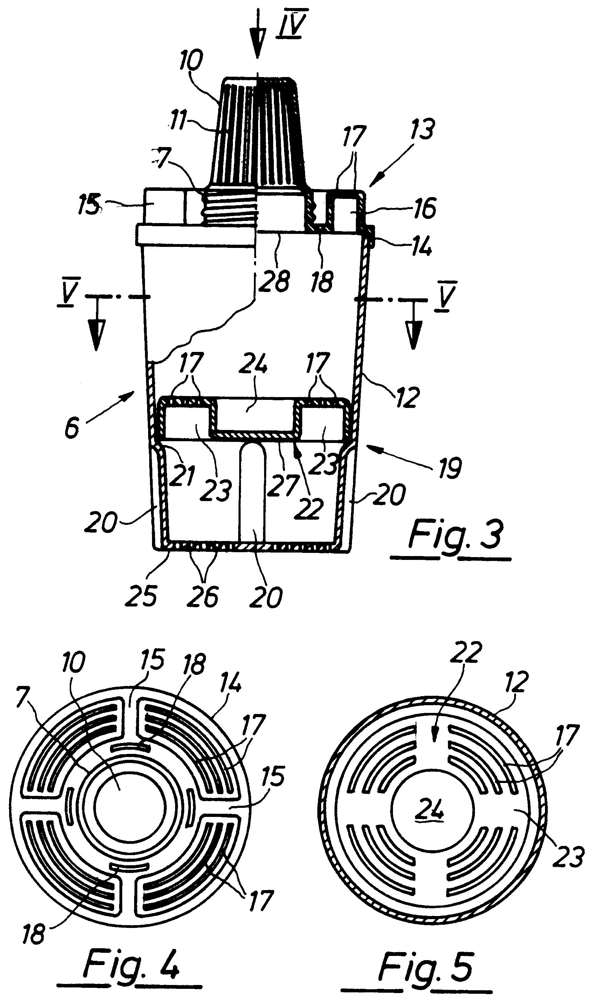

- Figur 3: die Filterpatrone vergrößert, teilweise im Schnitt,
- Figur 4: eine Ansicht gemäß der Richtung IV nach Figur 3 und Figur 5 ein Schnitt gemäß der Linie V - V in Figur 3.

Der Haushaltswasserfilter besteht im wesentlichen aus einem Trichterteil 1 in dem eine Aufnahme 2 mit einem Gewinde 3 vorgesehen ist. Das Trichterteil 1 ist auf einen Auffangbehälter 4 aufgesetzt und mit einem Deckel 5 abgedeckt. Die Filterpatrone 6 ist über einen Gewindekragen 7 in das Gewinde 3 der Aufnahme 2 eingeschraubt.

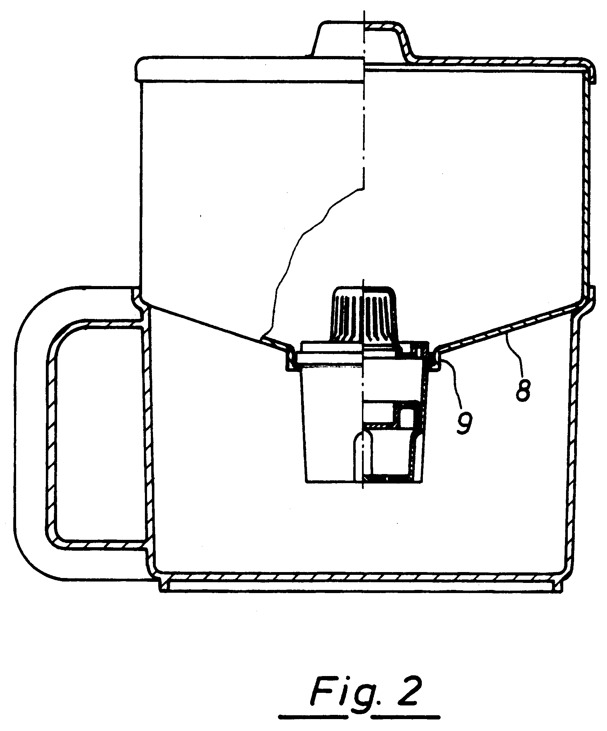

In der Alternativlösung gemäß Fig. 2 ist das Trichterteil 8 mit einem Aufnahmekragen 9, in dem die Filterpatrone 6 von oben eingesteckt ist, versehen.

Die Filterpatrone 6, sie ist für beide Ausführungsformen identisch ausgeführt, könnte natürlich für die Variante gemäß Figur 2 auch ohne Gewindekragen 7, dem sich ein Einlaufdom 10 mit Einlaufschlitzen 11 anschließt, ausgeführt sein.

Der Einlaufdom 10 und Gewindekragen 7 sind einstückig mit dem das Behälterteil 12 verschließenden Kopfteil hergestellt. Das Kopfteil 13 ist über einen Absatz 14 in nicht mehr dargestellter Art und Weise mit dem Behälterteil 12 verbunden. Ringförmig um den Einlaufdom 10 sind vier durch Einlaufrinnen 15 getrennte Kammern 16 als Quellraum für die Füllung der Filterpatrone angeordnet. Die Kammern 16 sind mit Entlüftungsöffnungen 17 versehen.

Am Ende der Einlaufrinnen 15 sind im Kopfteil 13 Einlaufschlitze 18 vorgesehen. Dadurch sind keine besonderen Abdichtungsmaßnahmen bei der Aufnahme 2 erforderlich. Gleichzeitig dienen diese Einlaufschlitze bei der Ausführung gemäß Figur 2 dazu, das im Trichterteil 8 stehende Restwasser in die Filterpatrone abzuleiten.

Am Umfang des Behälterteils 12 sind in der unteren Hälfte 19 vier Griffmulden 20 eingeformt.

Diese Griffmulden 20 dienen als Auflage 21 für eine Verzögerungsplatte 22. Die Verzögerungsplatte 22 ist zu einer ringförmigen Kammer 23 mit Entlüftungsöffnungen 17 geformt, wodurch in der Mitte ein Topf 24 entsteht. Dieser Topf 24 dient dazu, ein gänzliches Austrocknen der Filterpatrone bei leerem Auffangbehältern 4 zu verhindern. Wie bereits in der US-PS 2 017 456 ausgeführt, ist eine Restfeuchte für die keimtötende Wirkung des Filtermaterials erforderlich.

Am Behälterboden 25 ist die Filterpatrone 6 mit Auslauföffnungen 26 versehen.

Der Zusammenbau erfolgt nun derart, daß zunächst der Behälterteil 12 bis zur Auflage 21 mit Filtergranulat gefüllt wird. Danach wird die Verzögerungsplatte 22 eingesetzt, die dann mit ihrem Topfboden 27 auf dem Filtergranulat aufsitzt. Danach wird das Behälterteil bis zum Behälterrand 28 welterbefüllt und das Kopfteil 13 mittels des Absatzes 14 auf das Behälterteil 12 aufgesetzt.

Nach wässern der Filterpatrone kann sich das Filtergranulat in die Kammern 16 und 23 sowie in den Bereich des Gewindekragens 7 ausdehnen.

## Patentansprüche

1. Haushaltswasserfilter mit einem über einem Auffangbehälter (4) angeordneten Trichterteil (8), in das über eine Aufnahme (2), eine aus einem der Aufnahme (2) zugekehrten Kopfteil (13) und einem Behälterteil (12) bestehenden, mit einer Füllung aus lonentauschgranulat mit gesilberter Aktivkohle versehenen Filterpatrone (6) eingesetzt ist, dadurch gekennzeichnet, daß das Kopfteil (13) mit über dem Füllniveau (28) des Behälterteiles (12) liegenden, ringförmigen, von Einlaufinnen (15) durchschnittenen Kammern (16) und/oder eine im Behälterteil (12) etwa mittig quer zur Durchströmrichtung gelagerte Verzögerungsplatte (22) mit einer ringförmigen Kammer (23) als Quellraum für die Füllung versehen sind.

2. Haushaltswasserfilter nach Anspruch 1, dadurch gekennzeichnet, daß die Kammern (16, 23) mit Entlüftungsöffnungen (17) versehen sind.

3. Haushaltswasserfilter nach Anspruch 1 oder 2, dadurch gekennzeichnet, daß am Umfang des Behälterteiles (12) in der unteren Hälfte (19) zumindest zwie Griffmulden (20) zur Auflage (21) der Verzögerungsplatte vorgesehen sind.

## Claims

1. Domestic water filter having a funnel part (8) which is arranged above a storage container (4) and into which there is inserted, via a receiving means (2), the filter cartridge (6) which comprises a head part (13), directed towards the receiving means (2), and a container part (12) and is provided with a filling of ion-exchange granules with silvered activated carbon, characterized in that the head part (13) is provided with annular chambers (16) which are located above the filling level (28) of the container part (12) and are intersected by inlet channels (15), and/or a retardation (22) mounted approximately centrally in the container part (12), transversely with respect to the throughflow direction, is provided with an annular chamber (23) as a swelling space for the filling.

2. Domestic water filter according to Claim 1, characterized in that the chambers (16, 23) are provided with venting openings (17).

3. Domestic water filter according to Claim 1 or 2, characterized in that at least two recessed grips (20) for bearing (21) the retardation plate are provided on the periphery of the container part (12) in the lower half (19).

## Revendications

1. Filtre domestique d'eau comprenant une partie formant entonnoir (1) disposée sur un récipient de réception (4), dans lequel une cartouche de filtrage (6) constituée par un partie de tête (13) tournée vers un logement (2) et une partie formant récipient (12) est disposée sur le logement (2) et est remplie avec une charge de granulats échangeurs d'ions comprenant du charbon activé argenté, caractérisé en ce que la partie de tête (13) est munie de chambres annulaires (16) subdivisées par des rainures d'admission (15) disposées au-dessus du niveau de remplissage (28) de la partie formant récipient (12) et/ou d'une plaque de retardement (22) montée sensiblement centralement et transversalement à la direction du courant dans la partie formant récipient (12) et comprenant une chambre de forme annulaire (23) formant un espace de gonflement pour la charge.

2. Filtre domestique d'eau selon la revendication 1, caractérisé en ce que les chambres (16, 23) sont munies d'ouvertures d'évacuation d'air (17).

3. Filtre domestique d'eau selon la revendication 1 ou 2, caractérisé en ce qu'au moins deux dépressions de préhension (20) destinées à constituer un appui (21) pour la plaque de retardement sont prévues sur la périphérie de la moitié inférieure (19) de la partie formant récipient (12).
